# EUROPEAN PATENT SPECIFICATION

(11) **EP 3 384 170 B1**
(45) Date of publication and mention of the grant of the patent: **24.03.2021**
(21) Application number: 16809612.1
(22) Date of filing: 22.11.2016
(51) Int. Cl.: F16C 19/18, F16C 33/66, F16C 33/58, F16C 33/60, F16C 19/50, F16C 19/54, F16C 27/04, F16C 33/62, F16C 17/18, F02C 7/06, F02C 7/20, F16C 19/52

(54) **NON-SYMMETRIC BALL BEARING SYSTEM FOR A TURBOCHARGER**
NICHTSYMMETRISCHES KUGELLAGERSYSTEM FÜR EINEN TURBOLADER
SYSTÈME DE ROULEMENT À BILLES NON SYMÉTRIQUE POUR UN TURBOCOMPRESSEUR

(30) Priority: 04.12.2015 US 201562263139 P
(43) Date of publication of application: 10.10.2018
(73) Proprietor: BorgWarner Inc., Auburn Hills, MI 48326 (US)
(72) Inventor: LONGACRE, Christian C., Arden North Carolina 28704 (US)
(74) Representative: Peterreins Schley
(86) International application number: PCT/US2016/063259
(87) International publication number: WO 2017/095690

(56) References cited:
- WO-A1-2014/123772
- DE-A1-102014 205 100
- JP-A- 2012 092 934
- US-A- 5 253 985
- US-A1- 2010 254 644
- US-A1- 2014 086 731
- US-B1- 9 004 774

## Description

### TECHNICAL FIELD

The field to which the disclosure generally relates includes ball bearing systems.

### BACKGROUND

Bearing systems within turbochargers operate in substantially different conditions on the turbine side and the compressor side of a turbocharger housing. DE 10 2014 205100 A1 discloses an angular contact bearing with outer and inner bearing rings. The inner and outer bearing rings may be formed of two different portions, this document shows the features of the preamble of appended claim 1. Further bearings can be found in US5253985A, WO2014123772A1 and US20140086731A1.

### SUMMARY OF ILLUSTRATIVE VARIATIONS

A number of variations include a ball bearing system that includes an outer race having a first inner circumferential surface defining a first passage, a first inner race defining a second passage and a second inner race defining a third passage wherein the first inner race and second inner race are disposed within the first passage and further includes a first plurality of bearing balls disposed at a first contact angle between the first inner race and the outer race and a second plurality of bearing balls disposed at a second contact angle between the second inner race and the outer race and where the outer race further includes a first outer circumferential surface defining at least a first oil jet constructed and arranged to provide a lubricant to the first plurality of bearing balls and at least a second oil jet constructed and arranged to provide a lubricant to the second plurality of bearing balls.

Other illustrative variations within the scope of the invention will become apparent from the detailed description provided hereinafter. It should be understood that the detailed description and enumerated variations, while disclosing optional variations, are intended for purposes of illustration only and are not intended to limit the scope of the invention.

### BRIEF DESCRIPTION OF THE DRAWINGS

Select examples of variations within the scope of the invention will become more fully understood from the detailed description and the accompanying drawings, wherein:

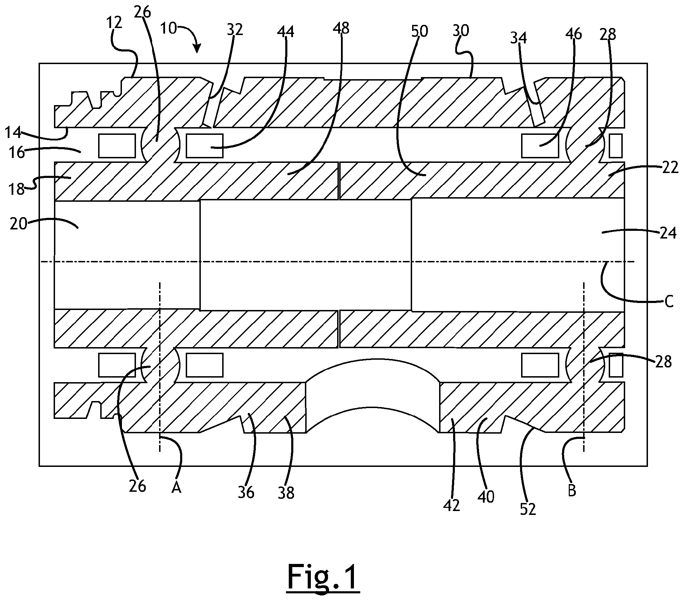

Figure 1 depicts one variation of a non-symmetric ball bearing system.

### DETAILED DESCRIPTION OF ILLUSTRATIVE VARIATIONS

The following description of the variations is merely illustrative in nature and is in no way intended to limit the scope of the invention, its application, or uses. The following description of variants is only illustrative of components, elements, acts, products, and methods considered to be within the scope of the invention and are not in any way intended to limit such scope by what is specifically disclosed or not expressly set forth. The components, elements, acts, products, and methods as described herein may be combined and rearranged other than as expressly described herein and still are considered to be within the scope of the invention.

Referring to Figure 1, a ball bearing system 10 includes an outer race 12 having a longitudinal axis (C) having a squeeze film damper surface and a first inner circumferential surface 14 defining a first passage 16 and wherein the outer race 12 further includes a circumferential oil groove 52 and a first outer race 36 includes a first outer race material 38 and a second outer race 40 includes a second outer race material 42 wherein the first outer race material 38 and the second outer race material 42 are different. The ball bearing system 10 further includes a first inner race 18 defining a second passage 20 and a second inner race 22 defining a third passage 24 wherein the first inner race 18 and second inner race 22 are disposed within the first passage 16 to define a shaft passage including the second passage 20 and the third passage 24. The ball bearing system 10 includes a first plurality of bearing balls 26 disposed at a first contact angle (A) between the first inner race 18 and the outer race 12 and a second plurality of bearing balls 28 disposed at a second contact angle (B) between the second inner race 22 and the outer race 12 and wherein the first contact angle may be a different angle than that of the second contact angle. The first inner race 18 may include a first inner race material 48 and the second inner race 22 may include a second inner race material 50 wherein the first inner race material 48 and the second inner race material 50 are different. The outer race 12 further includes a first outer circumferential surface 30 defining a at least a first oil jet 32 constructed and arranged to provide a lubricant to the first plurality of bearing balls 26 and at least a second oil jet 34 constructed and arranged to provide a lubricant to the second plurality of bearing balls 28. The first plurality of bearing balls 26 may include a first diameter and the second plurality of bearing balls 28 may include a second diameter wherein the first diameter and the second diameter are different and wherein the first plurality of bearing balls 26 may also include a different number of bearing balls than the second plurality of bearing balls 28.. The ball bearing system 10 may further include a first cage 44 disposed between the outer race 12 and the first inner race 18 constructed and arranged to hold the first plurality of bearing balls 26 and a second cage 46 disposed between the outer race 12 and the second inner race 22 constructed and arranged to hold the second plurality of bearing balls 28.

The ball bearing system may be constructed and arranged to be utilized within a turbocharger housing wherein the first inner race, second passage, first plurality of bearing balls, first cage, first outer race, and first oil jet may be constructed and arranged to be in fluid communication with a compressor side of a turbocharger housing. Additionally, the ball bearing system may be constructed and arranged to be utilized within a turbocharger housing wherein the second inner race, third passage, second plurality of bearing balls, second cage, second outer race, and second oil jet may be constructed and arranged to be in fluid communication with a turbine side of a turbocharger housing. In some cases, the turbine side of a turbocharger housing may require components to operate at a higher temperature, higher cost, and higher performance than the compressor side of a turbocharger housing. Additionally, the first cage may be utilized on the compressor side of a turbocharger housing and may include a lower cost, lower temperature capable material than the second cage which may be utilized on the turbine side of a turbocharger housing. The first inner race, the second inner race, the first outer race, the second outer race may all share a common longitudinal axis (C).

The ball bearing system may additionally be constructed and arranged to incorporate squeeze film damping wherein the squeeze film damper surface(s) may have different clearances on the first outer race and the second outer race.

Additionally, the first oil jet and the second oil jet may be constructed and arranged to provide different oil flow rates to the compressor side or turbine side or first plurality of bearing balls or the second plurality of bearing balls of the ball bearing system.

The first contact angle (A) and the second contact angle (B) may vary to account for thrust load magnitudes within the ball bearing system with a relatively smaller angle for lower thrust load.

The ball bearing system may include a decoupling ring or decoupling rings (not shown) that may center a rotor during low-speed operation.

As one of ordinary skill in the art will appreciate, the ball bearing system may include a number of variations with respect to component geometry, component materials, and components physical characteristics and properties and still remain within the scope of the disclosed variations. For example, the first, second, or a third ball bearing may include varying bearing ball dimensions, materials, and ball count. Likewise, the first and second oil jets, or additional oil jets, may be constructed and arranged to accommodate for any variations within the first, second, or third plurality of bearing balls. Similarly, the first and second outer races and first and second inner races may include different dimensions and materials

According to variation 1, a ball bearing system 10 includes an outer race 12 having a first inner circumferential surface 14 defining a first passage 16, a first inner race 18 defining a second passage 20 and a second inner race 22 defining a third passage 24 wherein the first inner race 18 and second inner race 22 are disposed within the first passage 16 and further includes a first plurality of bearing balls 26 disposed at a first contact angle (A) between the first inner race 18 and the outer race 12 and a second plurality of bearing balls 28 disposed at a second contact angle (B) between the second inner race 22 and the outer race 12 and where the outer race 12 further includes a first outer circumferential surface 30 defining at least a first oil jet 32 constructed and arranged to provide a lubricant to the first plurality of bearing balls 26 and at least a second oil jet 34 constructed and arranged to provide a lubricant to the second plurality of bearing balls 28.

Variation 2 includes a product as set forth in variation 1 wherein the outer race 12 further includes a circumferential oil groove 52 and a first outer race 36 includes a first outer race material 38 and a second outer race 40 includes a second outer race material 42 wherein the first outer race material 38 and the second outer race material 42 are different.

Variation 3 may include a product as set forth in variation 1 or 2 further may include a first cage 44 disposed between the outer race 12 and the first inner race 18 constructed and arranged to hold the first plurality of bearing balls 26 and a second cage 46 disposed between the outer race 12 and the second inner race 22 constructed and arranged to hold the second plurality of bearing balls 28. The first cage and second cage may feature different ball pocket diameters, inner diameter, outer diameter, and thickness based on stresses put on the first cage or second cage. Additionally, the first cage and second cage may comprise various materials and coatings constructed and arranged to accommodate for various stresses within the ball bearing system.

Variation 4 may include a product as set forth in any of variations 1 through 3 wherein the first inner race 18 may include a first inner race material 48 and the second inner race 22 may include a second inner race material 50 wherein the first inner race material 48 and the second inner race material 50 are different.

Variation 5 may include a product as set forth in any of variations 1 through 4 wherein the first plurality of bearing balls 26 may include a first diameter and the second plurality of bearing balls 28 may include a second diameter wherein the first diameter and the second diameter are different.

Variation 6 may include a product as set forth in any of variations 1 through 5 wherein the first plurality of bearing balls 26 may include a different number of bearing balls than the second plurality of bearing balls 28.

Variation 7 may include a product as set forth in any of variations 1 through 6 wherein the first contact angle is a different angle than that of the second contact angle.

Variation 8 may include a product as set forth in any of variations 1 through 7 further including a third plurality of bearing balls disposed adjacent the first plurality of bearing balls, the second plurality of bearing balls, or both.

The above description of variations of the invention is merely demonstrative in nature and, thus, variations thereof are not to be regarded as a departure from the scope of the inventions disclosed within this document.

## Claims

1. A product comprising:
a ball bearing system (10) comprising an outer race (12) having a first inner circumferential surface (14) defining a first passage (16), a first inner race (18) defining a second passage (20) and a second inner race (22) defining a third passage (24) wherein the first inner race (18) and second inner race (22) are disposed adjacent to one another within the first passage (16) and further comprising a first plurality of bearing balls (26) disposed at a first contact angle (A) between the first inner race (18) and the outer race (12) and a second plurality of bearing balls (28) disposed at a second contact angle (B) between the second inner race (22) and the outer race (12) and where the outer race (12) further comprises a first outer circumferential surface (30) defining at least a first oil jet (32) constructed and arranged to provide a lubricant to the first plurality of bearing balls (26) and at least a second oil jet (34) constructed and arranged to provide a lubricant to the second plurality of bearing balls (28); and
wherein the outer race (12) further comprises an outer circumferential oil groove (52) and a first outer race (36) comprising a first outer race material (38) and a second outer race (40) comprising a second outer race material (42) wherein the first outer race material (38) and the second outer race material (42) are different.

2. A product as set forth in claim 1 further comprising a first cage (44) disposed between the outer race (12) and the first inner race (18) constructed and arranged to hold the first plurality of bearing balls (26) and a second cage (46) disposed between the outer race (12) and the second inner race (22) constructed and arranged to hold the second plurality of bearing balls (28).

3. A product as set forth in claim 1 wherein the first inner race (18) comprises a first inner race material (48) and the second inner race (22) comprises a second inner race material (50) wherein the first inner race material (48) and the second inner race material (50) are different.

4. A product as set forth in claim 1 wherein the first plurality of bearing balls (26) comprises a first diameter and the second plurality of bearing balls (28) comprises a second diameter wherein the first diameter and the second diameter are different.

5. A product as set forth in claim 1 wherein the first plurality of bearing balls (26) comprises a different number of bearing balls than the second plurality of bearing balls (28).

6. A product as set forth in claim 1 wherein the first contact angle (A) is a different angle than the second contact angle (B).

7. A product as set forth in claim 1 further comprising a third plurality of bearing balls disposed adjacent at least one of the first plurality of bearing balls (26), the second plurality of bearing balls (28), or both.

## Patentansprüche

1. Produkt, umfassend:
ein Kugellagersystem (10), das einen Außenring (12) mit einer ersten Innenumfangsfläche (14), die einen ersten Durchgang (16) definiert, einen ersten Innenring (18), der einen zweiten Durchgang (20) definiert, und einen zweiten Innenring (22), der einen dritten Durchgang (24) definiert, umfasst, wobei der erste Innenring (18) und der zweite Innenring (22) in dem ersten Durchgang (16) benachbart angeordnet sind, und ferner umfassend eine erste Mehrzahl von Lagerkugeln (26), die in einem ersten Kontaktwinkel (A) zwischen dem ersten Innenring (18) und dem Außenring (12) angeordnet sind, und eine zweite Mehrzahl von Lagerkugeln (28), die in einem zweiten Kontaktwinkel (B) zwischen dem zweiten Innenring (22) und dem Außenring (12) angeordnet sind, und wobei der Außenring (12) ferner eine erste Außenumfangsfläche (30), die mindestens eine erste Öldüse (32) definiert, welche ausgebildet und angeordnet ist, um der ersten Mehrzahl von Lagerkugeln (26) ein Schmiermittel zuzuführen, und mindestens eine zweite Öldüse (34), die ausgebildet und angeordnet ist, um der zweiten Mehrzahl von Lagerkugeln (28) ein Schmiermittel zuzuführen, umfasst; und
wobei der Außenring (12) ferner eine Außenumfangsölnut (52) und einen ersten Außenring (36) umfasst, der ein erstes Außenringmaterial (38) umfasst, und einen zweiten Außenring (40) umfasst, der ein zweites Außenringmaterial (42) umfasst, wobei das erste Außenringmaterial (38) und das zweite Außenringmaterial (42) unterschiedlich sind.

2. Produkt nach Anspruch 1, ferner umfassend einen ersten Käfig (44), der zwischen dem Außenring (12) und dem ersten Innenring (18) angeordnet ist, der ausgebildet und angeordnet ist, um die erste Mehrzahl von Lagerkugeln (26) zu halten, und einen zweiten Käfig (46), der zwischen dem Außenring (12) und dem zweiten Innenring (22) angeordnet ist, der ausgebildet und angeordnet ist, um die zweite Mehrzahl von Lagerkugeln (28) zu halten.

3. Produkt nach Anspruch 1, wobei der erste Innenring (18) ein erstes Innenringmaterial (48) umfasst und der zweite Innenring (22) ein zweites Innenringmaterial (50) umfasst, wobei das erste Innenringmaterial (48) und das zweite Innenringmaterial (50) unterschiedlich sind.

4. Produkt nach Anspruch 1, wobei die erste Mehrzahl von Lagerkugeln (26) einen ersten Durchmesser umfassen und die zweite Mehrzahl von Lagerkugeln (28) einen zweiten Durchmesser umfassen, wobei der erste Durchmesser und der zweite Durchmesser unterschiedlich sind.

5. Produkt nach Anspruch 1, wobei die erste Mehrzahl von Lagerkugeln (26) eine unterschiedliche Anzahl von Lagerkugeln als die zweite Mehrzahl von Lagerkugeln (28) umfassen.

6. Produkt nach Anspruch 1, wobei der erste Kontaktwinkel (A) ein unterschiedlicher Winkel als der zweite Kontaktwinkel (B) ist.

7. Produkt nach Anspruch 1, ferner umfassend eine dritte Mehrzahl von Lagerkugeln, die benachbart zu zumindest einer von der ersten Mehrzahl von Lagerkugeln (26), der zweiten Mehrzahl von Lagerkugeln (28), oder beiden angeordnet sind.

## Revendications

1. Produit comprenant :
un système de roulement à billes (10) comprenant une bague de roulement extérieure (12) ayant une première surface circonférentielle intérieure (14) définissant un premier passage (16), une première bague de roulement intérieure (18) définissant un deuxième passage (20) et une deuxième bague de roulement intérieure (22) définissant un troisième passage (24), la première bague de roulement intérieure (18) et la deuxième bague de roulement intérieure (22) étant disposées l'une à côté de l'autre à l'intérieur du premier passage (16) et comprenant en outre une première pluralité de billes de roulement (26) disposées suivant un premier angle de contact (A) entre la première bague de roulement intérieure (18) et la bague de roulement extérieure (12) et une deuxième pluralité de billes de roulement (28) disposées suivant un deuxième angle de contact (B) entre la deuxième bague de roulement intérieure (22) et la bague de roulement extérieure (12) et la bague de roulement extérieure (12) comprenant en outre une première surface circonférentielle extérieure (30) définissant au moins un premier jet d'huile (32) construit et prévu pour fournir du lubrifiant à la première pluralité de billes de roulement (26) et au moins un deuxième jet d'huile (34) construit et prévu pour fournir du lubrifiant à la deuxième pluralité de billes de roulement (28) ; et
la bague de roulement extérieure (12) comprenant en outre une rainure d'huile circonférentielle extérieure (52) et une première bague de roulement extérieure (36) comprenant un premier matériau de bague de roulement extérieure (38) et une deuxième bague de roulement extérieure (40) comprenant un deuxième matériau de bague de roulement extérieure (42), le premier matériau de bague de roulement extérieure (38) et le deuxième matériau de bague de roulement extérieure (42) étant différents.

2. Produit selon la revendication 1, comprenant en outre une première cage (44) disposée entre la bague de roulement extérieure (12) et la première bague de roulement intérieure (18), construite et prévue pour retenir la première pluralité de billes de roulement (26) et une deuxième cage (46) disposée entre la bague de roulement extérieure (12) et la deuxième bague de roulement intérieure (22), construite et prévue pour retenir la deuxième pluralité de billes de roulement (28).

3. Produit selon la revendication 1, dans lequel la première bague de roulement intérieure (18) comprend un premier matériau de bague de roulement intérieure (48) et la deuxième bague de roulement intérieure (22) comprend un deuxième matériau de bague de roulement intérieure (50), le premier matériau de bague de roulement intérieure (48) et le deuxième matériau de bague de roulement intérieure (50) étant différents.

4. Produit selon la revendication 1, dans lequel la première pluralité de billes de roulement (26) comprend un premier diamètre et la deuxième pluralité de billes de roulement (28) comprend un deuxième diamètre, le premier diamètre et le deuxième diamètre étant différents.

5. Produit selon la revendication 1, dans lequel la première pluralité de billes de roulement (26) comprend un nombre de billes de roulement différent de la deuxième pluralité de billes de roulement (28).

6. Produit selon la revendication 1, dans lequel le premier angle de contact (A) est un angle différent du deuxième angle de contact (B).

7. Produit selon la revendication 1, comprenant en outre une troisième pluralité de billes de roulement disposée de manière adjacente à au moins l'une parmi la première pluralité billes de roulement (26), la deuxième pluralité de billes de roulement (28), ou les deux.
